# EUROPÄISCHE PATENTANMELDUNG

(11) **EP 2 907 615 A1**
(43) Veröffentlichungstag der Anmeldung: **19.08.2015**
(21) Anmeldenummer: 14170324.9
(22) Anmeldetag: 28.05.2014
(51) Int. Cl.: B23K 35/28, B22F 7/08, B23K 35/36, B23K 20/04, B23K 35/02, B32B 15/01

(54) **Verbundblech**

(71) Anmelder: AMAG rolling GmbH, 5282 Braunau am Inn-Ranshofen (AT)
(72) Erfinder: Hanko, Gerhard, 84359 Simbach am Inn (DE); Hacksteiner, Meinrad, 5261 Helpfau-Uttendor (AT); Öller, Josef, 5134 Schwand im Innkreis (AT)
(74) Vertreter: Jell, Friedrich

(57) **Zusammenfassung**

Es wird ein Verfahren zur Herstellung einer Plattierlage (1, 11) und ein Verbundblech (12, 112) mit einer Kernschicht (100) auf Aluminiumbasis und mit mindestens einer Plattierschicht gezeigt, aufweisend mindestens ein Lot, insbesondere Hartlot, auf Aluminiumbasis und mindestens ein Flussmittel. Um zeit-, energie- und kostenreduziert eine Plattierlage (1) sowie ein standfestes Verbundblech (12, 112) zu schaffen, wird vorgeschlagen, dass dass die aus mindestens zwei Schichten (30, 60) bestehende Plattierschicht eine an die Kernschicht (100) anschließende Lotschicht (30), insbesondere Hartlotschicht, und eine an diese Lotschicht (30) anschließende Mischschicht (60) mit mindestens einem Lot auf Aluminiumbasis und mit wenigstens einem Flussmittel aufweist.

## Beschreibung

Die Erfindung betrifft ein Verbundblech mit einer Kernschicht auf Aluminiumbasis und mit mindestens einer Plattierschicht, aufweisend mindestens ein Lot, insbesondere Hartlot, auf Aluminiumbasis und mindestens ein Flussmittel.

Um beim Hartlöten auf die Zugabe von zusätzlichem Flussmittel verzichten zu können, ist es aus dem Stand der Technik bekannt (WO2008/110808A1), auf ein Aluminiumblech eine Plattierlage aufzuwalzen, das Hartlot auf Aluminiumbasis und ein Flussmittel enthält. Diese Plattierlage wird durch ein Sprühverfahren aus einer Mischung aus Hartlot und Flussmittel mit anschließendem Umformen erzeugt. Ein derartiges Herstellungsverfahren ist jedoch vergleichsweise zeit-, energie- und kostenaufwendig. Zudem eignet sich ein Sprühverfahren nur für bestimmte Flussmittel-arten und ist hinsichtlich des Gehalts an Flussmittel in der Plattierlage beschränkt. Außerdem können durch solche Verfahren nur vergleichsweise kleine Plattierlagen erzeugt werden - großflächige Hartlotbleche, mit den daraus resultierenden Vorteilen sind nicht verfügbar. Des Weiteren kann das Lötergebnis infolge eines Flussmittelüberhangs negativ beeinträchtigt werden und zudem zu Benetzungsfehlern führen. Außerdem schließt das Flussmittel direkt an die Kernschicht an, wodurch die Kernschicht durch Korngrenzen- bzw. Diffusionsphänomene erheblich nachteilig beeinträchtigt werden kann.

Es ist daher die Aufgabe der Erfindung, ein Flussmittel aufweisendes Verbundblech der eingangs geschilderten Art derart zu verbessern, dass beim Löten stets mit einer ausreichenden Benetzung mit Lot gerechnet werden kann, ohne dass der Kernwerkstoff durch das Flussmittel beeinträchtigt wird.

Die Erfindung löst die gestellte Aufgabe hinsichtlich des Verbundblechs dadurch, dass dass die aus mindestens zwei Schichten bestehende Plattierschicht eine an die Kernschicht anschließende Lotschicht, insbesondere Hartlotschicht, und eine an diese Lotschicht anschließende Mischschicht mit mindestens einem Lot auf Aluminiumbasis und mit wenigstens einem Flussmittel aufweist.

Weist die aus mindestens zwei Schichten bestehende Plattierschicht eine an die Kernschicht anschließende Lotschicht, insbesondere Hartlotschicht, und eine an diese Lotschicht anschließende Mischschicht mit mindestens einem Lot auf Aluminiumbasis und mit wenigstens einem Flussmittel auf, kann beim Fügen stets genügend Lot zur Verfügung stehen. Lot der Lotschicht kann nämlich beim Löten ergänzend zum Lot der Mischschicht aufschmelzen und damit für eine ausreichende Benetzung (zum Beispiel des Werkstücks bzw. des Fügepartners) mit Lot sorgen. Eine standfeste stoffschlüssige Verbindung kann damit sichergestellt werden. Außerdem kann die Lotschicht zwischen der Kernschicht und der Mischschicht eine nachteilige Penetration der Kernschicht mit Flussmittel verhindern oder zumindest reduzieren. Zudem kann die Lotschicht zwischen der Kernschicht und der Mischschicht in der Art einer Sperrschicht das Flussmittel von der Kernschicht trennen. Eine ausreichend mechanisch stabile Mischschicht aus Lot und Flussmittel kann sich ausbilden, wenn das Lot eine Al-Si-Basis aufweist. Das erfindungsgemäße Verbundblech kann daher eine vergleichsweise hohe chemische Beständigkeit aufweisen.

Im Allgemeinen wird erwähnt, dass unter einem Lot, Lotwerkstoff bzw. Lotblech bevorzugt ein Hartlot, Hartlotwerkstoff bzw. Hartlotblech verstanden wird. Dies schließt jedoch ein Weichlot, einen Weichlotwerkstoff bzw. ein Weichlotblech nicht aus. Im Allgemeinen wird weiter erwähnt, dass sich das erfindungsgemäße Verbundblech als Lotblech besonders eigenen kann. Vorzugsweise für ein Endprodukt, beispielsweise für einen Kühler. Weiter wird im Allgemeinen erwähnt, dass es ein Lot auf Aluminiumbasis jegliche Aluminiumlegierung umfasst, die als Lot geeignet ist. Beispielsweise umfasst eine Al-Si-Basis jede Aluminiumlegierung, die als Hauptbestandteil Al und dazu geringer in Gewichtsprozent Si aufweist, was weitere im Gewichtsprozent zur Al und Si geringere Legierungselemente in dieser Aluminiumlegierung nicht ausschließt.

Vorteile im metallurgischen Verbund des plattierten Verbundblechs können sich einstellen, wenn die Zusammensetzung des Lots der Mischschicht und die Zusammensetzung der Lotschicht, die an die Kernschicht anschließt, ident sind.

Eine für ein stoffschlüssiges Fügen vorteilhafte Zusammensetzung der Mischschicht kann sich ergeben, wenn die Mischschicht 0,1 bis 20 Gew.-% aufweist. Insbesondere 0,3 bis 10 Gew.-%, Flussmittel in der Mischschicht, kann einer einfachen Weiterverarbeitung des Verbundblechs förderlich sein.

Ein besonderes Verbundblech kann geschaffen werden, wenn die Mischschicht Flussmittel und als Rest Lot, insbesondere Hartlot, sowie herstellungsbedingt unvermeidbare Verunreinigungen aufweist. Im Allgemeinen wird erwähnt, dass die Mischschicht Verunreinigungen mit jeweils maximal 0,05 Gew.-% und gesamt höchstens 1 Gew.-% aufweisen kann.

Es ist außerdem Aufgabe der Erfindung, ein zeit-, energie- und kostenreduziertes Verfahren zur Herstellung einer Plattierlage für ein Verbundblech zu schaffen. Zudem soll das Verfahren einfach handzuhaben sein und die Herstellung einer vergleichsweise großen Plattierlage ermöglichen können. Außerdem soll das Verfahren nahezu unabhängig von der Art und/oder Menge an Flussmittel durchführbar sein.

Die Erfindung löst die gestellte Aufgabe dadurch, dass das Verfahren zur Herstellung einer mindestens zweischichtigen Plattierlage folgende Schritte umfasst:
- Bereitstellen eines Behälters, der zumindest bereichsweise einen Lotwerkstoff, insbesondere einen Hartlotwerkstoff, auf Aluminiumbasis aufweist,
- Bereitstellen mindestens einer Pulvermischung mit mindestens einem Flussmittelpulver und mit wenigstens einem Lotpulver, insbesondere Hartlotpulver, auf Aluminiumbasis,
- Einfüllen der Pulvermischung in den offenen Behälter und Verschließen des Behälters,
- Umformen des verschlossenen Behälters mit Verdichten der im Behälter eingeschlossenen Pulvermischung zur Ausbildung eines metallurgischen Verbunds mit dem Lotwerkstoff des Behälters und
- längsseitiges Trennen des umgeformten Behälters in mindestens eine Plattierlage, aufweisend eine Lotschicht und eine an diese Lotschicht (anschließende Mischschicht mit Lot und Flussmittel.

Werden ein Behälter, der außen zumindest bereichsweise einen Lotwerkstoff, insbesondere einen Hartlotwerkstoff, auf Aluminiumbasis aufweist, und eine Pulvermischung mit mindestens einem Flussmittelpulver und mit wenigstens einem Lotpulver, insbesondere Hartlotpulver, auf Aluminiumbasis bereitgestellt, wobei diese Pulvermischung in den offenen Behälter eingefüllt wird, kann eine vergleichsweise reine Schicht aus Lotwerkstoff sichergestellt werden, wenn der Behälter nach dem Einfüllen der Pulvermischung verschlossen und dann umgeformt wird. Die eingefüllte Pulvermischung kann dadurch nämlich im Inneren des verschlossenen Behälters gehalten werden, womit dann auch beim Umformen des Behälters dessen Außenhülle frei von Flussmittelpulver bleibt. Das erfindungsgemäße Verfahren kann sich dadurch für eine hohe Anzahl an Flussmittelarten eignen, sowie kann hinsichtlich des Gehalts an Flussmittel in der Pulvermischung eine äußerst hohe Bandbreite bieten. Zudem kann mit diesem Umformen und aufgrund des dadurch bedingten Verdichtens der im Behälter eingeschlossenen Pulvermischung diese zur Ausbildung eines metallurgischen Verbunds mit dem Lot des Behälters gebracht werden, was zu einer zusammenhaltenden Schichtstruktur führen kann. Wird in weiterer Folge dieser umgeformte Behälter längsseitig, beispielsweise horizontal, getrennt, kann auf einfache Weise mindestens eine zweischichtige Plattierlage geschaffen werden. Diese besondere Plattierlage weist nämlich eine Lotschicht und eine an diese Lotschicht anschließende Mischschicht mit Lot und Flussmittel auf, wobei sich einerseits die Lotschicht aus dem Behälter und andererseits die Mischschicht aus der Pulvermischung ausbilden. Gegenüber einem aus dem Stand der Technik bekannten Sprühverfahren kann erfindungsgemäß eine Plattierlage erheblich zeit-, energie- und kostenreduziert geschaffen werden.

Vereinfachte Verhältnisse in der Herstellung einer Plattierlage können sich ergeben, wenn ein Behälter mit einer Wand aus einem Lotwerkstoff, beispielsweise aus einem Lotblech oder einer Lotplatte, bereitgestellt wird. Vorzugsweise können sich hierzu die Bodenwand und/oder Deckelwand eignen, um damit die Plattiereignung zu verbessern. Zum Unterschied dazu können die Seitenwände des Behälters aus einem Werkstoff, insbesondere Al-Werkstoff, mit verbesserter Umformbarkeit in Relation zur Bodenwand und/oder Deckelwand ausgebildet sein. Hierfür können sich zum Beispiel EN AW-3003 oder EN AW-3103 Aluminiumlegierungen eignen. Zudem ist eine Mindestdicke von 30 mm der diesbezüglichen Wand aus Lotwerkstoff vorstellbar, um ein Umformen des Behälters reproduzierbar sicherzustellen.

Werden in den Behälter unterschiedliche Pulvermischungen nacheinander eingefüllt, kann ein Schichtverbund an Pulvermischungen im Behälter geschaffen werden, der metallurgisch mit dem Lotwerkstoff verbunden eine mehrschichtige Plattierlage mit besonders gut an die jeweils gewünschten Erfordernisse angepassten mechanischen und/oder chemischen Eigenschaften ermöglichen kann. Vorzugsweise können sich die Pulvermischungen im Gew.-% an Flussmittel unterscheiden bzw. vorzugsweise ansteigen, um damit in Richtung der Decklage bzw. Außenseite der Plattierlage eine Gradienten an in Gew.-% ansteigenden Gehalt an Flussmittel zu schaffen.

Eine sich für das Verfahren besonders eignende Pulvermischung kann geschaffen werden, wenn eine, insbesondere homogene, Pulvermischung mit 0,1 bis 20 Gew.- %, insbesondere 0,3 bis 10 Gew.-%, Flussmittel bereitgestellt wird. Entsprechend den vorstehend genannten Endbereichen kann selbst ein vergleichsweise hoher Gehalt an Flussmittel erfindungsgemäß weiterverarbeitet werden, was durch andere bekannte Verfahren aufgrund der Sprödigkeit solch eines Materialverbunds nicht durchführbar wäre.

Vorzugsweise wird, um eine vergleichsweise hohe Reproduzierbarkeit des Verfahrens zu erreichen, eine Pulvermischung mit Flussmittel und als Rest Lot, insbesondere Hartlot, sowie herstellungsbedingt unvermeidbare Verunreinigungen bereitgestellt.

Der Verfahrensaufwand kann vereinfacht werden, wenn der umgeformte Behälter längsseitig durch seine verdichtete Pulvermischung hindurch getrennt wird.

Vorteilhaft können durch einen Trennschritt zugleich zwei Plattierlagen geschaffen werden, wenn das längsseitige Trennen des umgeformten Behälters mittig erfolgt.

Das Mischverfahren kann unter anderem in seiner Handhabung vereinfacht werden, indem für die Pulvermischung ein Lotpulver auf Al-Si Basis verwendet wird.

Weisen der Lotwerkstoff des Behälters und das Lotpulver die gleiche chemische Zusammensetzung auf, kann die Ausbildung eines metallurgischen Verbunds zwischen Behälter und verdichteter Pulvermischung erleichtert und das Verfahren in weiterer Folge verbessert reproduzierbar werden.

Wird der Behälter mit einem Sägeverfahren spanend längsseitig getrennt, vereinfachen sich die Verfahrensschritte noch weiter.

Zudem kann das Verfahren weiter vereinfacht werden, wenn der Behälter mit einem Walzverfahren umgeformt wird.

Vorteilhaft kann die erfindungsgemäß hergestellte Plattierlage zur Herstellung eines Verbundblechs verwendet werden, indem auf einer Kernlage auf Aluminiumbasis diese Plattierlage walzplattiert wird.

In den Figuren wird beispielsweise der Erfindungsgegenstand anhand mehrerer Ausführungsvarianten näher dargestellt. Es zeigen
- Fig. 1a bis 1d: eine schematische Darstellung eines Verfahrens zur Herstellung einer Plattierlage,
- Fig. 2: eine schematische Darstellung zu einem Verfahren zur Herstellung eines Verbundblechs,
- Fig. 3: ein Querschnitt durch ein gemäß Fig. 2 hergestelltes Verbundblech nach einem ersten Ausführungsbeispiel,
- Fig. 4: eine zur Plattierlage nach Fig. 1d alternative Plattierlage, hergestellt durch das erfindungsgemäße Verfahren und
- Fig. 5: ein Querschnitt durch ein gemäß Fig. 3 hergestelltes Verbundblech nach einem weiteren Ausführungsbeispiel.

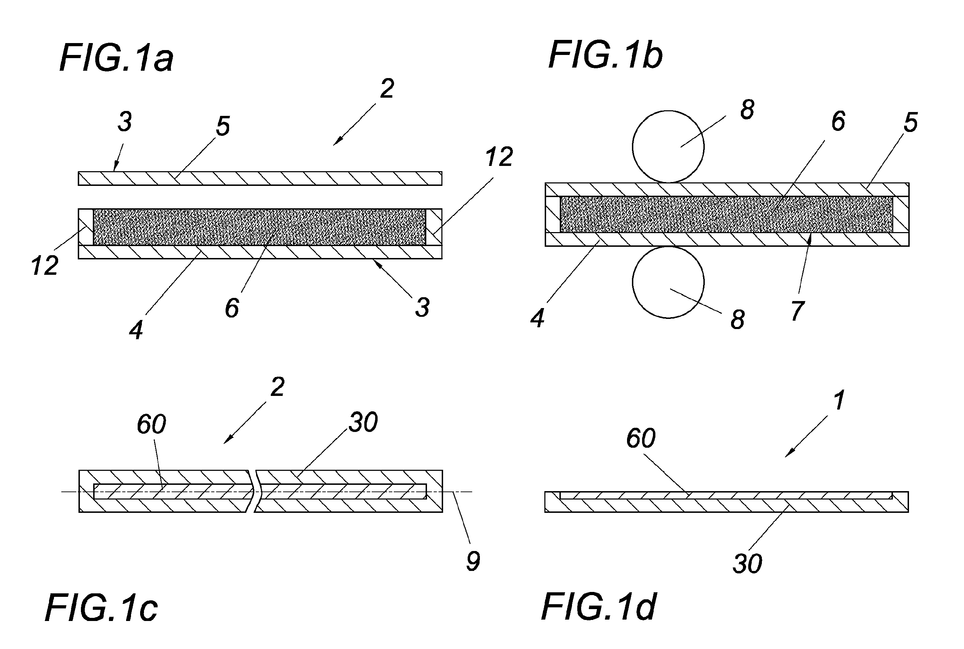

Gemäß den Figuren 1a bis 1b sind beispielsweise die unterschiedlichen Verfahrensschritte zur Herstellung einer Plattierlage 1 beispielsweise dargestellt. Zuerst wird ein Behälter 2 geschaffen, der zumindest bereichsweise einen Lotwerkstoff 3 aufweist. Erfindungsgemäß wird dieser Behälter 2 geschaffen, in dem eine Lotplatte, nämlich eine Hartlotplatte, mit einer Al-Si Basis verwendet wird, eine Wanne aus einer Bodenwand 4 und Seitenwänden 12 als auch eine Deckelwand 5 auszubilden. Hierzu können Seitenwände und Bodenwand etwa miteinander verschweißt werden. Beispielsweise kann der Behälter 2 aus einer EN AW-4343 oder EN AW-4045 Legierung bestehen. Die Wandstärke des Behälters bzw. die Mindestdicke der Lotplatte beträgt 30mm. Andere Wandstärken sind vorstellbar.

Die Wanne wird dann gemäß Fig. 1 a mit einer homogen Pulvermischung 6, bestehend aus
- 95 Gew.-% Lotpulver, nämlich Hartlotpulver, mit einer Al-Si-Basis und
- 5 Gew.-% Flussmittelpulver des Typs FL nach DIN EN1045
befüllt und anschließend mit der Deckelwand 5 bzw. dem Deckel dicht verschlossen, beispielsweise über eine nicht näher dargestellte Schweißnaht. Im Allgemeinen wird erwähnt, dass auch andere Behälterformen vorstellbar sind, beispielsweise ein stirnseitig offenes Profil. Zudem kann die Pulvermischung auch noch herstellungsbedingt unvermeidbare Verunreinigungen mit jeweils maximal 0,05 Gew.-% und gesamt höchstens 1 Gew.-% aufweisen. Als ausreichend kann sich bereits 0,1 bis 20 Gew.-%, insbesondere 0,3 bis 10 Gew.-%, Flussmittel in der Pulvermischung erweisen.

Es ist jedoch im Allgemeinen weiter möglich bzw. vorstellbar - jedoch nicht näher dargestellt -, nacheinander unterschiedliche Pulvermischungen in den Behälter 2 einzufüllen, um damit eine mehrlagige Schichtbildung mit beispielsweise verschiedensten Charakteristika auszubilden - denkbar sind Pulvermischungen mit unterschiedlichen chemischen Zusammensetzungen.

Dem Befüllen des Behälters 2 mit der Pulvermischung 6 kann eine Spülung der Wanne 3 mit Inertgas vorausgehen - oder auch diverse Oberflächenbehandlungen des Behälters, etwa ein Beizen. Nach dem dichten Verschließen des Behälters 2 kann eventuell auch noch ein Evakuieren seines Hohlraums 7 vorgenommen werden, um unerwünschte Gase aus dem Behälter 2 zu entfernen.

Der befüllte und dichte Behälter 2 wird anschließend umgeformt, wie in Fig. 1b zu erkennen. Vorzugsweise wird der Behälter 2 hierzu vorkompaktiert, beispielsweise durch Schmieden, und anschließend reversierend durch ein Walzgerüst 8 geführt, womit dieser Behälter 2 druckbelastet wird - hierzu ist nur der zweitgenannte Verfahrensschritt in der Figur dargestellt. Die im Behälter 2 eingeschlossene Pulvermischung 6 wird demnach verdichtet und ein metallurgischer Verbund mit dem Lotblech 3, der Wanne und der Deckelwand 5 des Behälters 2 ausgebildet. Der umgeformte Behälter 2 weist so einen zusammenhaltenden Schichtverbund aus einer äußeren Lotschicht 30 und eine Mischschicht 60, die sich aus der Pulvermischung 6 ausbildet, auf.

Dieser Schichtverbund wird nun einem mechanischen Trennverfahren, nämlich einem Sägen, unterworfen. Wie in Fig. 1c angedeutet wird der Behälter 2 längsseitig bzw. horizontal, und zwar durch seine verdichtete Pulvermischung 6 bzw. Mischschicht 60 entlang einer Trennlinie 9 getrennt, um eine Plattierlage 1 zu schaffen. Indem die Trennlinie 9 mittig des Behälters 2 verläuft, werden aus einem einzigen Behälter 2 zwei Plattierlagen 1 geschaffen - nach Fig. 1d ist lediglich eine dieser Plattierlagen 1 dargestellt. Vorteilhaft weist diese Plattierlage 1 nun eine vergleichsweise reine Lotschicht 30 und eine Mischschicht 60 aus Lot und Flussmittel auf. Die Enden werden abgetrennt, um eine homogene Plattierlage 1 ohne störende Reste der Seitenwände 12 zu erreichen, was nicht näher dargestellt worden ist. Durch das erfindungsgemäße Verfahren kann daher zeit-, energie- und kostenreduziert sowie besonders gut reproduzierbar eine zweischichtige Plattierlage 1 geschaffen werden.

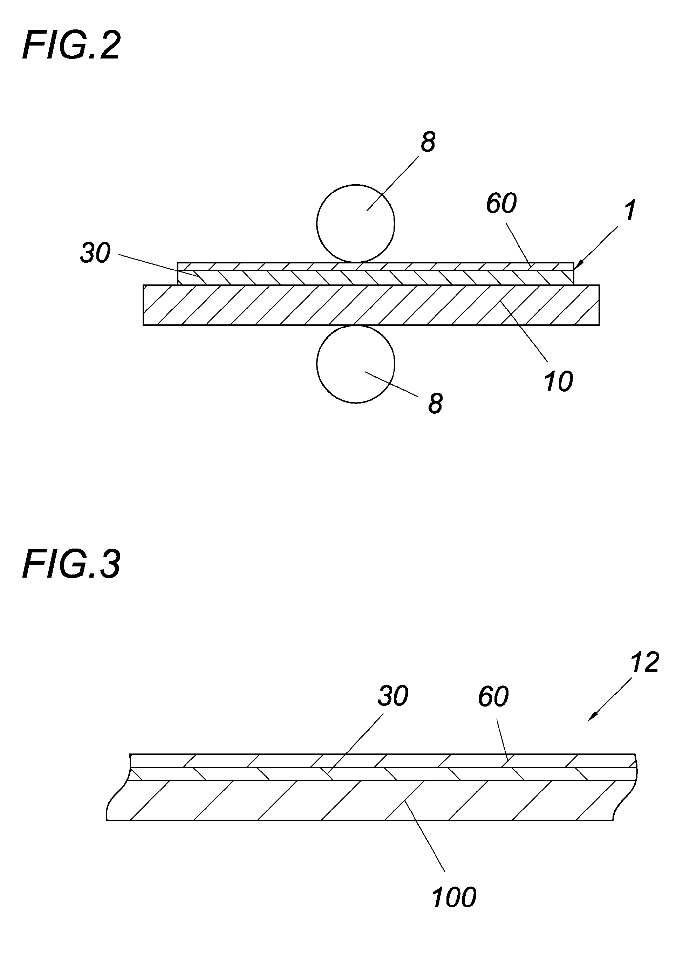

Die so geschaffene, erfindungsgemäße Plattierlage 1, wie in Fig. 2 beispielsweise dargestellt, wird auf eine Kernlage 10 aus der A3xxx Reihe aufgelegt und über nicht näher dargestellte Schweißverbindungen mit der Kernlage 10 stoffschlüssig verbunden. Solch eine Kernlage kann beispielsweise ein Kernblech oder eine Kernplatte darstellen. Anschließend wird dies mithilfe eines Walzgerüstes 8 reversierend walzplattiert, was ein nach Fig. 3 dargestelltes Verbundblech 12 als metallurgischen Verbund ergibt.

Dieses Verbundblech 12 besteht nun, wie in Fig. 3 dargestellt, aus einer Kernschicht 100, ausbildet von der Kernlage 10, einer anschließenden Lotschicht 30 des Lots 3 des Behälters 2 und einer Mischschicht 60, die Lot und Flussmittel aufweist und auf die Pulvermischung 6 zurückzuführen ist.

Vorteilhaft sind die chemischen Zusammensetzungen der Lotschicht 30 und des Lots der Mischschicht 60 ident. Im Gegensatz zum Stand der Technik reicht daher die Mischschicht 60 mit dem Flussmittel nicht bis zur Kernschicht 100, wodurch eine erhöhte Penetration der Kernschicht aufgrund des Flussmittels reduziert bzw. vermieden wird. Die Lotschicht 30 wirkt somit als eine Art Sperrschicht.

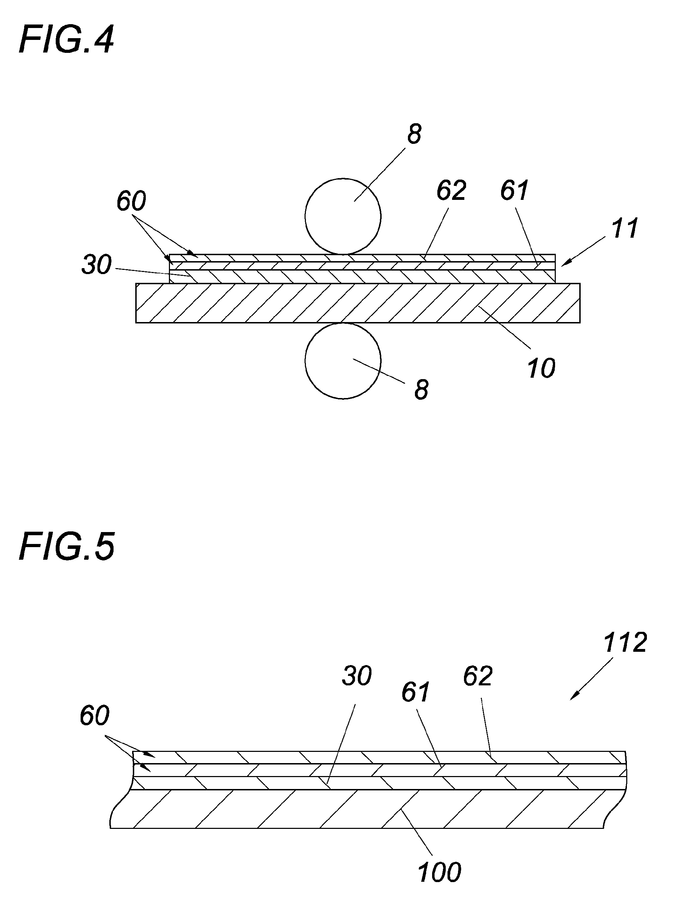

Wie bereits zu Fig. 1a angemerkt, werden nach einem weiteren Ausführungsbeispiel nacheinander unterschiedliche Pulvermischungen in den Behälter 2 eingefüllt, um damit eine mehrlagige Schichtbildung mit verschiedensten Charakteristika auszubilden. Das Herstellverfahren der Plattierlage 11 erfolgt, wie zur Plattierlage 1 gemäß den Figuren 1a bis 1d dargestellt. Wie in Fig. 4 zu erkennen, zeigt sich dieser Unterschied der Pulverbefüllung an der Plattierlage 11 durch einen zweischichtigen Aufbau der Mischschicht 60. Diese Mischschicht 60 weist eine Teilschicht 61 und eine zweite äußere Teilschicht 62 auf. Beide Teilschichten 61 und 62 unterscheiden sich in der Konzentration an Flussmittel bzw. im Gew.-% an Flussmittel. So weist die äußere Teilschicht 62 eine höhere Konzentration von Flussmittel auf, um damit einen Konzentrationsgradienten auszubilden, was die Gefahr einer Penetration der Kernlage 10 erheblich reduziert. Wie in Fig. 4 dargestellt, wird diese Plattierlage 11 auf eine Kernlage walzpattiert, was zu einem Verbundblech 112 nach Fig. 5 führt.

## Patentansprüche

1. Verbundblech mit einer Kernschicht (100) auf Aluminiumbasis und mit mindestens einer Plattierschicht, aufweisend mindestens ein Lot, insbesondere Hartlot, auf Aluminiumbasis und mindestens ein Flussmittel, **dadurch gekennzeichnet, dass** die aus mindestens zwei Schichten (30, 60) bestehende Plattierschicht eine an die Kernschicht (100) anschließende Lotschicht (30), insbesondere Hartlotschicht, und eine an diese Lotschicht (30) anschließende Mischschicht (60) mit mindestens einem Lot auf Aluminiumbasis, insbesondere auf einer Al-Si-Basis, und mit wenigstens einem Flussmittel aufweist.

2. Verbundblech nach Anspruch 1, **dadurch gekennzeichnet, dass** die Zusammensetzung des Lots der Mischschicht (60) und die Zusammensetzung der Lotschicht (30), die an die Kernschicht (100) anschließt, ident sind.

3. Verbundblech nach Anspruch 1 oder 2, **dadurch gekennzeichnet, dass** die Mischschicht (60)
0,1 bis 20 Gew.-%, insbesondere 0,3 bis 10 Gew.-%, Flussmittel aufweist.

4. Verbundblech nach Anspruch 1, 2 oder 3, **dadurch gekennzeichnet, dass** die Mischschicht (60) Flussmittel und als Rest Lot, insbesondere Hartlot, sowie herstellungsbedingt unvermeidbare Verunreinigungen aufweist.

5. Verfahren zur Herstellung einer mindestens zweischichtigen Plattierlage (1, 11) umfassend folgende Schritte:
• Bereitstellen eines Behälters (2), der zumindest bereichsweise einen Lotwerkstoff (3), insbesondere einen Hartlotwerkstoff, auf Aluminiumbasis aufweist,
• Bereitstellen mindestens einer Pulvermischung (6) mit mindestens einem Flussmittelpulver und mit wenigstens einem Lotpulver, insbesondere Hartlotpulver, auf Aluminiumbasis, insbesondere auf Al-Si-Basis,
• Einfüllen der Pulvermischung (6) in den offenen Behälter (2) und Verschließen des Behälters (2),
• Umformen des verschlossenen Behälters (2) mit Verdichten der im Behälter (2) eingeschlossenen Pulvermischung (6) zur Ausbildung eines metallurgischen Verbunds mit dem Lotwerkstoff (3) des Behälters (2) und
• längsseitiges Trennen des umgeformten Behälters (2) in mindestens eine Plattierlage (1, 11), aufweisend eine Lotschicht (30) und eine an diese Lotschicht (30) anschließende Mischschicht (60) mit Lot und Flussmittel.

6. Verfahren nach Anspruch 5, **dadurch gekennzeichnet, dass** der Behälter (2) mit einer Wand, insbesondere Bodenwand (4) und/oder Deckelwand (5), aus einem Lotwerkstoff (3) bereitgestellt wird.

7. Verfahren nach Anspruch 5 oder 6, **dadurch gekennzeichnet, dass** in den Behälter (2) unterschiedliche, vorzugsweise im Gew.-% an Flussmittel unterschiedliche, Pulvermischungen nacheinander eingefüllt werden.

8. Verfahren nach Anspruch 5, 6 oder 7, **dadurch gekennzeichnet, dass** eine, insbesondere homogene, Pulvermischung mit 0,1 bis 20 Gew.-%, insbesondere 0,3 bis 10 Gew.-%, Flussmittel bereitgestellt wird.

9. Verbundblech nach einem der Ansprüche 5 bis 8, **dadurch gekennzeichnet, dass** eine Pulvermischung (6) mit Flussmittel und als Rest Lot, insbesondere Hartlot, sowie herstellungsbedingt unvermeidbare Verunreinigungen bereitgestellt wird.

10. Verfahren nach einem der Ansprüche 5 bis 9, **dadurch gekennzeichnet, dass** der umgeformte Behälter (2) längsseitig durch seine verdichtete Pulvermischung (3) hindurch getrennt wird.

11. Verfahren nach Anspruch 10, **dadurch gekennzeichnet, dass** zur Schaffung von zwei Plattierlagen (1, 11) das längsseitige Trennen des umgeformten Behälters (2) mittig erfolgt.

12. Verfahren nach einem der Ansprüche 5 bis 11, **dadurch gekennzeichnet, dass** der Lotwerkstoff (3) des Behälters (2) und das Lotpulver die gleiche chemische Zusammensetzung aufweisen.

13. Verfahren nach einem der Ansprüche 5 bis 12, **dadurch gekennzeichnet, dass** der Behälter (2) mit einem Sägeverfahren spanend getrennt wird.

14. Verfahren nach einem der Ansprüche 5 bis 13, **dadurch gekennzeichnet, dass** der Behälter (2) mit einem Walzverfahren umgeformt wird.

15. Verfahren zur Herstellung eines Verbundblechs (12, 112), bei dem auf einer Kernlage (10) auf Aluminiumbasis eine Plattierlage (1, 11), hergestellt nach einem der Ansprüche 5 bis 14, walzplattiert wird.
